## Europäisches Patentamt
## European Patent Office
## Office européen des brevets

(19)

(11) Veröffentlichungsnummer: **0 090 771**
**B1**

(12)
# EUROPÄISCHE PATENTSCHRIFT

(45) Veröffentlichungstag der Patentschrift:
02.10.85

(51) Int. Cl.⁴: **H 04 L 9/02**

(21) Anmeldenummer: **83810116.0**

(22) Anmeldetag: **21.03.83**

(54) Verfahren und Vorrichtung zur chiffrierten Uebermittlung von Nachrichten.

(30) Priorität: 26.03.82 CH 1884/82
29.06.82 CH 3977/82
14.09.82 CH 5442/82

(43) Veröffentlichungstag der Anmeldung:
05.10.83 Patentblatt 83/40

(45) Bekanntmachung des Hinweises auf die Patenterteilung:
02.10.85 Patentblatt 85/40

(84) Benannte Vertragsstaaten:
AT CH DE FR GB LI SE

(56) Entgegenhaltungen:
EP - A - 0 035 448
DE - B - 2 706 421
GB - A - 2 050 021
US - A - 4 200 770

NATIONAL TELECOMMUNICATIONS CONFERENCE,
Band 2, 3.-6. Dezember 1978, Seiten 26.1.1 - 26.1.6, New
York, USA R.E. LENNON et al.: "Cryptographic key
distribution using composite keys"
IEEE Communications Society Magazine, November
1978, Vol. 16, No. 6, pp. 24 to 32

(73) Patentinhaber: GRETAG Aktiengesellschaft,
Althardstrasse 70, CH-8105 Regensdorf (CH)

(72) Erfinder: Mueller, Kurt Hugo, Dr., Höhenstrasse 15A,
CH-8304 Wallisellen (CH)

(74) Vertreter: Pirner, Wilhelm et al, Patentabteilung der
CIBA-GEIGY AG Postfach, CH-4002 Basel (CH)

**Beschreibung**

Die Erfindung betrifft ein Verfahren und eine Vorrichtung zur chiffrierten Übermittlung von Nachrichten gemäß den Oberbegriffen der Patentansprüche 1 und 12.

Einwegfunktionen, wie sie in den letzten Jahren für kryptologische Anwendungen propagiert wurden (siehe z. B. W. Diffie, M. E. Hellmann, »New Directions in Cryptography«, IEEE Transactions on Information Theory, Vol. IT-22, Nov. 1976, pp. 644—654 oder US-PS 4 200 770 oder M. E. Hellmann, »An Overview of Public Key Cryptography«, IEEE Communications Society Magazine, Nov. 1978, Vol. 16, No. 6, pp. 24—32), zeigen vor allem im Hinblick auf das Schlüsselmanagement neue Aspekte. Bei der klassischen Kryptographie kann zwar mit heutigen Methoden die Dechiffrierfestigkeit höchsten Ansprüchen genügen; dagegen sind aber potentielle Schwachstellen vorhanden im Bereich der Schlüsselerzeugung, -verteilung, -speicherung, -ladung, -vernichtung etc. Gerade hier eröffnen sich mittels mathematischer Einwegfunktionen gewisse Vorteile. Allerdings bringen die bekannten Verfahren inhärent auch gewisse Sicherheitsrisiken und Nachteile mit sich, welche die praktische Anwendung dann eben leider doch wieder etwas bedenklich erscheinen lassen. Der wohl augenscheinlichste Nachteil ist die fehlende Identifikation bzw. Authentizierung der Partnerstationen.

Aus EP-A-0 035 448 ist ein Chiffriersystem bekannt, bei welchem mit Hilfe einer Tabelle von vorbestimmten Paßwörtern jeweils nur vorbestimmte Personen miteinander kommunizieren können. Die autorisierten Personen sind dazu mit einem persönlichen Modul ausgestattet, welcher in gesicherter Form eine bestimmte Paßworttabelle sowie einen Algorithmus zur Erzeugung eines Chiffrierprogramms enthält, welcher auch das jeweils aktuelle Paßwort mit verarbeitet. Zum Betrieb des Chiffriersystems wird der persönliche Modul mit der Sende/Empfangsstation gekoppelt und über die Tastatur oder dergleichen das Paßwort des aufgerufenen Gesprächspartners eingegeben. Das Paßwort wird im Klartext übertragen und empfangsseitig darauf geprüft, ob es auch im Empfänger-Modul gespeichert ist, d. h. ob die beiden Partner tatsächlich zum gegenseitigen Nachrichtenaustausch autorisiert sind. Da das aktuelle Paßwort in die Erzeugung des Chiffrierprogramms mit eingeht, ist die Dechiffrierung nur möglich, wenn ein gültiges Paßwort verwendet wurde.

Dieses bekannte Paßwort-Chiffriersystem hat die allen Paßwort-Systemen inhärenten Nachteile. Da außerdem in den Sende/Empfangsstationen sämtliche Paßwörter des kompletten Systems gespeichert sein müssen, ist deren Anzahl relativ beschränkt. Und überdies stellt die Klartext-Übertragung des jeweiligen Paßworts immer ein Risiko dar.

Durch die Erfindung soll nun ein verbessertes Nachrichtenübermittlungssystem geschaffen werden, welches die inhärenten Nachteile der bekannten Systeme nicht aufweist und insbesondere ermöglicht, die jeweilige Partnerstation auf sichere Art und Weise zu identifizieren.

Das diesen Ansprüchen gerecht werdende erfindungsgemäße Verfahren und die zu dessen Durchführung geeignete erfindungsgemäße Vorrichtung sind in den unabhängigen Patentansprüchen 1 und 12 beschrieben. Bevorzugte Ausführungsvarianten ergeben sich aus den abhängigen Ansprüchen.

Im folgenden wird die Erfindung anhand von Ausführungsbeispielen in Verbindung mit der Zeichnung näher erläutert. Es zeigt

Fig. 1 ein Prinzip-Blockschaltbild einer Station einer erfindungsgemäßen Vorrichtung,

Fig. 2 ein Blockschema zur Erläuterung des engeren Chiffrier/Dechiffrierteils der Vorrichtung aus Fig. 1,

Fig. 3 und 10 bevorzugte Ausführungsformen bzw. Varianten der Einrichtung gemäß Fig. 2,

Fig. 4 ein Schema des Rechenablaufs bei Erzeugung und Austausch von Einwegfunktions-Chiffrierschlüsseln,

Fig. 5—7 Schemata zur Erläuterung verschiedener Varianten von Erzeugung und Austausch von Kennungsschlüsseln und

Fig. 8 und 9 Schemata zur Erläuterung der Einwirkung der Schlüssel auf einen Chiffriergenerator.

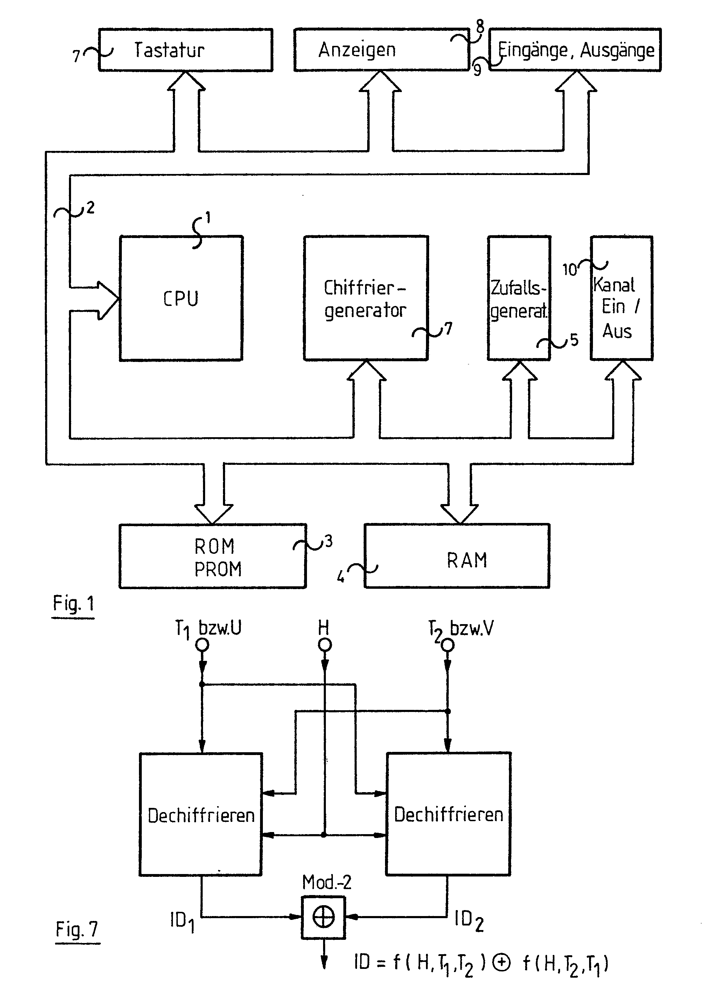

In Fig. 1 ist der grundsätzliche Aufbau einer Station einer erfindungsgemäßen Nachrichtenübermittlungsvorrichtung gezeigt, wobei die die eigentliche Übertragung der Nachrichten betreffenden Teile, also Sender, Empfänger etc., weggelassen und nur die unmittelbar mit der Chiffrierung bzw. Dechiffrierung bzw. mit den Schlüsseln zusammmehängenden Teile dargestellt sind.

Die Station ist, wie die meisten moderneren Geräte dieser Art, mittels eines Rechners implementiert und besteht dementsprechend aus einer Zentraleinheit 1, die über ein Busleitungssystem 2 mit einem Programmspeicher 3, einem Arbeitsspeicher 4, einem Zufallsgenerator 5 und einem Chiffriergenerator 6 sowie mit einer Tastatur 7, diversen Anzeigen 8, diversen Ein- und Ausgängen 9 und einem zum Übertragungskanal führenden Kanalein/ausgang 10 verbunden ist.

Die allgemeine Funktionsweise der Station ist gleich wie bei bekannten Stationen dieser Art und im wesentlichen etwa wie folgt:

In der Betriebsweise »Chiffrieren« wird der zu chiffrierende Klartext via Tastatur 7 oder via Eingang 9 eingegeben und mit einer vom Chiffriergenerator 6 erzeugten Chiffrierimpulssequenz modulo-2-gemischt. Das dabei entstehende Chiffrat geht dann in der Regel über den Kanalausgang 10 und den Übertragungskanal zur Partnerstation oder wird über die Anzeige 8 oder den Ausgang 9 ausgegeben. In der Betriebsart »Dechiffrieren« gelangt das Chiffrat in der Regel via den Kanaleingang 10 in die Station, es kann aber auch manuell oder über den Eingang 9 eingegeben werden. Es wird dann analog dem Chiffriervorgang wieder mit einer vom Chiffriergenerator 6 erzeugten Sequenz modulo-2-gemischt, und das den Klartext ergebende Mischprodukt wird dann gespeichert und/oder über den Ausgang 9 oder auch die Anzeige 8 ausgegeben. Der Chiffriergenerator 6 wird natürlich vor jeder Chiffrierung bzw. Dechiffrierung mit Hilfe eines oder mehrerer Chiffrierschlüssel in einen definierten Zustand gebracht. Die Art, Erzeugung, Auswahl und sonstige Handhabung der Chiffrierschlüssel wird weiter unten noch erläutert.

Wie schon erwähnt, entspricht die dargestellte Station bzw. Chiffrier/Dechiffriervorrichtung im grundsätzlichen Aufbau bis auf die noch zu erläuternden Unterschiede im Zusammenhang mit den Chiffrierschlüsseln dem bekannten Stand der Technik, wie er beispielsweise in Kapitel 8 des Buchs »Fehlerkorrigierende Blockcodierung für die Datenübertragung« von F. J. Furrer beschrieben oder durch das Gerät Gretacoder 601 der Firma Gretag AG, Regensdorf, Schweiz, gegeben ist. Eine eingehendere Beschreibung des apparativen Teils der Station erübrigt sich daher.

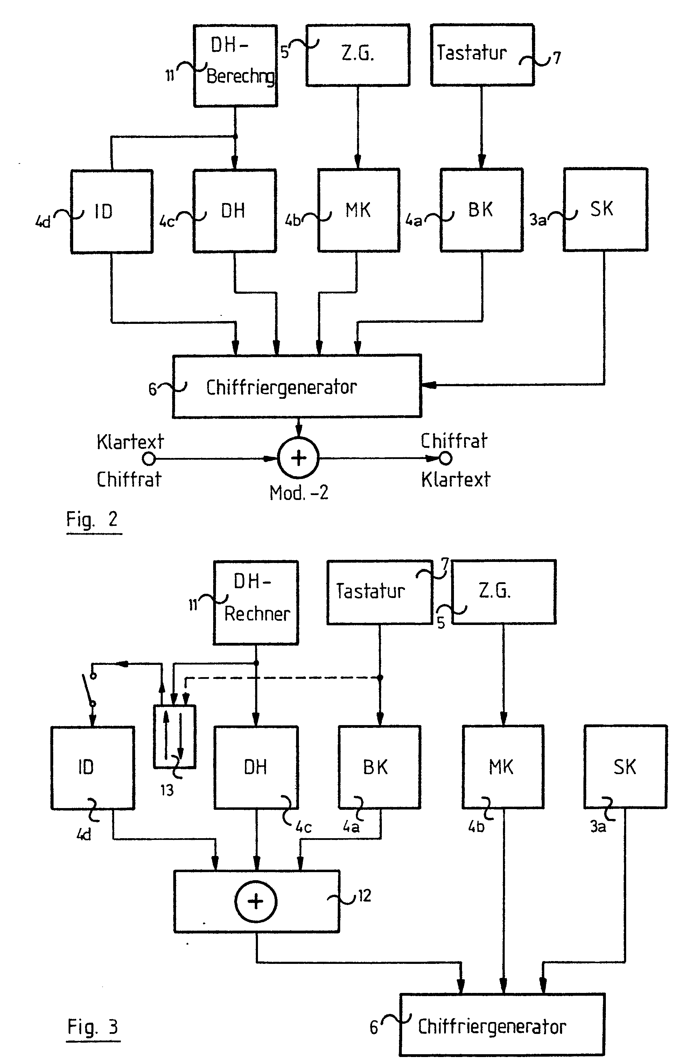

In Fig. 2 ist das der Erfindung zugrundeliegende Arbeitsprinzip der Chiffrier/Dechiffriereinrichtung in seiner allgemeinen Form schematisch dargestellt. Wie man sieht, arbeitet der Chiffriergenerator 6 mit fünf verschiedenen Chiffrierschlüsseln, und zwar einem im allgemeinen festen Strukturschlüssel SK, einem geheimen sog. Grundschlüssel BK, einem weiteren geheimen, sog. Einwegfunktions-Schlüssel DH und einem geheimen Kennungschlüssel ID sowie einem in der Regel nicht geheimen Zusatzschlüssel MK, dessen Aufgabe es ist, entweder direkt Initialisierung und Ablauf des Chiffriergenerators zu beeinflussen oder aber mindestens einen der anderen Schlüssel — hier den Grundschlüssel — zu modifizieren. Der Strukturschlüssel SK ist in einem programmierten Festwertspeicher (PROM) 3a gespeichert, die übrigen Chiffrierschlüssel in Bereichen 4a—4d des Arbeitsspeichers 4. Der Grundschlüssel BK wird über die Tastatur 7 eingegeben, der Zusatzschlüssel MK wird normalerweise vom Zufallsgenerator 5 erzeugt. Der Einwegfunktions-Schlüssel DH wird nach einem weiter unten noch erläuterten Schema, das hier stellvertretend durch den Block 11 angedeutet ist, berechnet, ebenso der Kennungschlüssel ID.

Strukturschlüssel SK, Grundschlüssel BK und Zusatzschlüssel MK sind die traditionellen Chiffrierschlüssel, die in zahlreichen Publikationen beschrieben und in vielen Chiffriergeräten praktisch angewendet werden und somit hier keiner näheren Erläuterung bedürfen. Der Einwegfunktions-Schlüssel DH ist ein nach den in den eingangs angeführten Publikationen beschriebenen Methoden erzeugter, zufälliger und geheimer Chiffrierschlüssel. Die Rolle des Kennungsschlüssels wird noch erläutert.

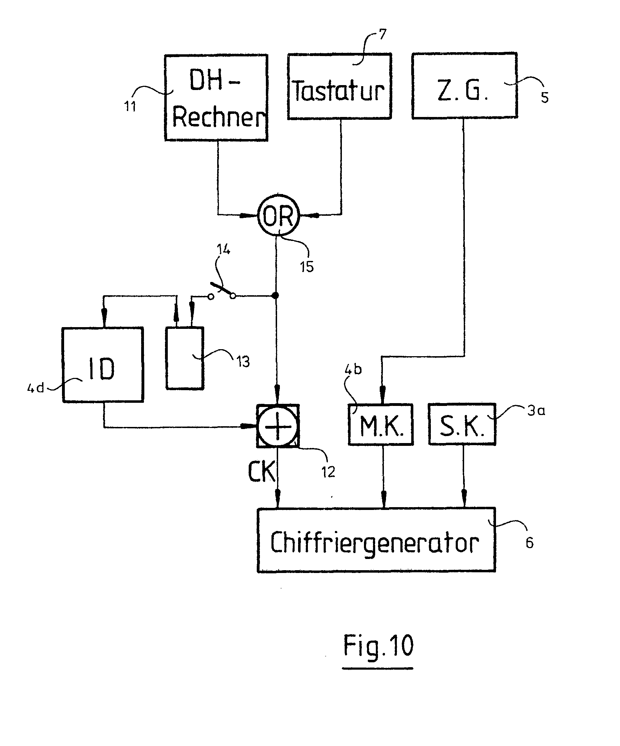

Alle fünf Schlüssel bilden in ihrer Gesamtheit eine Schlüsselinformation, die den Chiffriergenerator 6 eindeutig determiniert. Beim Ausführungsbeispiel nach Fig. 2 sind diese fünf Schlüssel unabhängig voneinander. In der Praxis wird man jedoch eher eine der Varianten nach Fig. 3 bzw. 10 wählen. Bei der Variante nach Fig. 3 sind der Grundschlüssel BK, der Einwegfunktions-Schlüssel DH und der Kennungschlüssel ID mittels eines Modulo-2-Mischers 12 miteinander verknüpft. Das Verknüpfungsprodukt CK kann dann als Geheim- oder Grundschlüssel der traditionellen Methoden angesehen werden, welcher dem Chiffriergenerator zusammen mit dem üblichen Strukturschlüssel SK und dem Zusatzschlüssel MK zugeführt wird. Die Variante nach Fig. 10 unterscheidet sich von der nach Fig. 3 darin, daß Tastatur 7 und DH-Rechner 11 über ein Oder-Gatter 15 verknüpft sind. Diese Variante erlaubt es, als Geheimelement entweder nur mit dem traditionellen, manuell eingegebenen Grundschlüssel oder an dessen Stelle mit einem Einwegfunktions-Schlüssel oder aber auch mit diesen beiden Geheimschlüsseln zugleich zu arbeiten. Analog kann auch der noch zu erläuternde Kennungsschlüssel ID manuell eingegeben oder automatisch erzeugt werden.

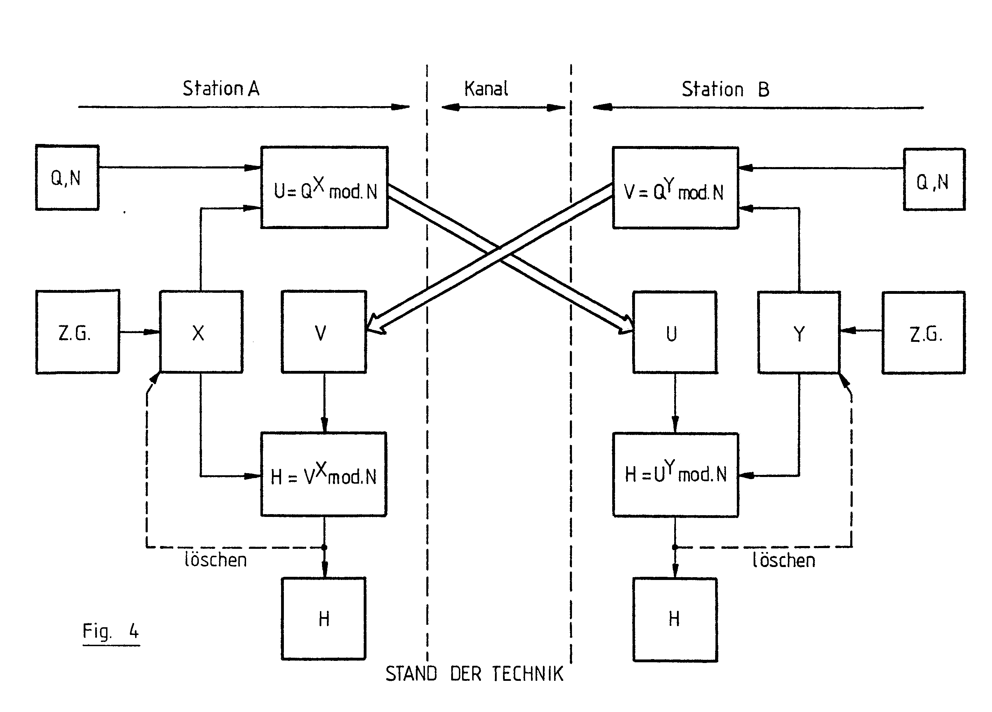

In Fig. 4 sind die Rechenabläufe bei der Erzeugung und beim Austausch eines Einwegfunktions-Schlüssels zwischen zwei Stationen am Beispiel des Diffie-Hellmann-Verfahrens (vgl. einleitende Literaturangaben) schematisch zusammengestellt. In beiden Partnerstationen sind zwei Zahlen Q und N gespeichert, die gewissen in der Literatur beschriebenen Einschränkungen genügen. Wenn nun ein Schlüssel erzeugt und ausgetauscht werden soll, bestimmt die aufrufende Station mittels Zufallsgenerator ZG eine Zufallszahl X, berechnet daraus die Zahl $U = Q^X \bmod N$ und überträgt dieses Resultat — fehlergesichert — zur Partnerstation. Analog bestimmt nun diese eine Zufallszahl Y, berechnet daraus die Zahl $V = Q^Y \bmod N$ und überträgt das Resultat zur ersten Station. Aus den übertragenen Zahlen U und V wird nun ein gemeinsamer Einwegfunktions-Schlüssel H gemäß $H = V^X \bmod N$ bzw. $H = U^Y \bmod N$ errechnet. Aus den übertragenen Informationen U und V lassen sich die Zufallszahlen X bzw. Y und damit H aufgrund des Einwegfunktionscharakters des Bildungsgesetzes für U und V nicht bestimmen.

Die Hauptvorteile eines so gebildeten Einwegfunktions-Schlüssels sind, daß das herkömmliche Schlüsselmanagement entfällt, daß ein häufiger Schlüsselwechsel möglich ist, daß die Stationen keine Geheimelemente enthalten, und daß die Operateure die Schlüssel überhaupt nicht kennen und dadurch nicht erpreßbar sind. Ein oftmals schwerwiegender Nachteil besteht darin, daß, wie schon erwähnt, die Stationen aufgrund fehlender Geheimelemente nicht ohne weiteres identifizierbar bzw. authentisierbar sind.

Dieser Nachteil wird nun durch die Verwendung eines weiteren Chiffrierschlüssels, nämlich des Kennungsschlüssels ID, behoben. Erfindungsgemäß werden Sende- und Empfangsstation vor der Verbringung an ihre jeweiligen Einsatzorte aufeinander abgestimmt, indem sie vorzugsweise per Kabel zusammengekoppelt werden und dabei automatisch ein Kennungsschlüssel (ID) erzeugt und beidseitig nicht-flüchtig gespeichert wird. Dieser Kennungsschlüssel ID bleibt dann für den gesamten Einsatz oder eventuell auch nur für eine gewisse längere Zeitspanne unverändert und wird als Chiffrierschlüssel mitverwendet, d. h., er bestimmt jeweils den Startzustand und Ablauf des Chiffriergenerators zusammen mit dem oder den anderen Chiffrierschlüsseln, die sich natürlich ständig ändern, mit.

Nach der Verbringung an ihre jeweiligen Einsatzorte sind die Stationen somit aufeinander abgestimmt, und die Identifizierung ist fortan gewährleistet. Nach diesem Zeitpunkt ist eine Verbindungsaufnahme durch Fremdstationen nicht mehr möglich (Freund-Feind-Erkennung), bzw. jeder solcher Versuch würde sofort bemerkt werden. Jeder Gerätewechsel, z. B. der Ersatz eines vernichteten Partners durch eine Feindstation oder Feindeinschaltung während einer Dislokation etc., ist sofort feststellbar.

Der Kennungsschlüssel ID selbst ist an sich beliebig. Auch ist er nicht nur zum Einsatz in Systemen mit Einwegfunktions-Schlüsseln geeignet, sondern selbstverständlich auch als (zusätzliche) Sicherung bei traditionellen Chiffriersystemen vorteilhaft.

Die Erzeugung und der Austausch der Kennungsschlüssel erfolgen gemäß einer vorteilhaften Ausgestaltung der Erfindung zufallsmäßig und in kryptologisch gesicherter Weise, so daß die Kennungsschlüssel für den Operateur (und einen allfälligen Abhorcher) unbekannt bleiben.

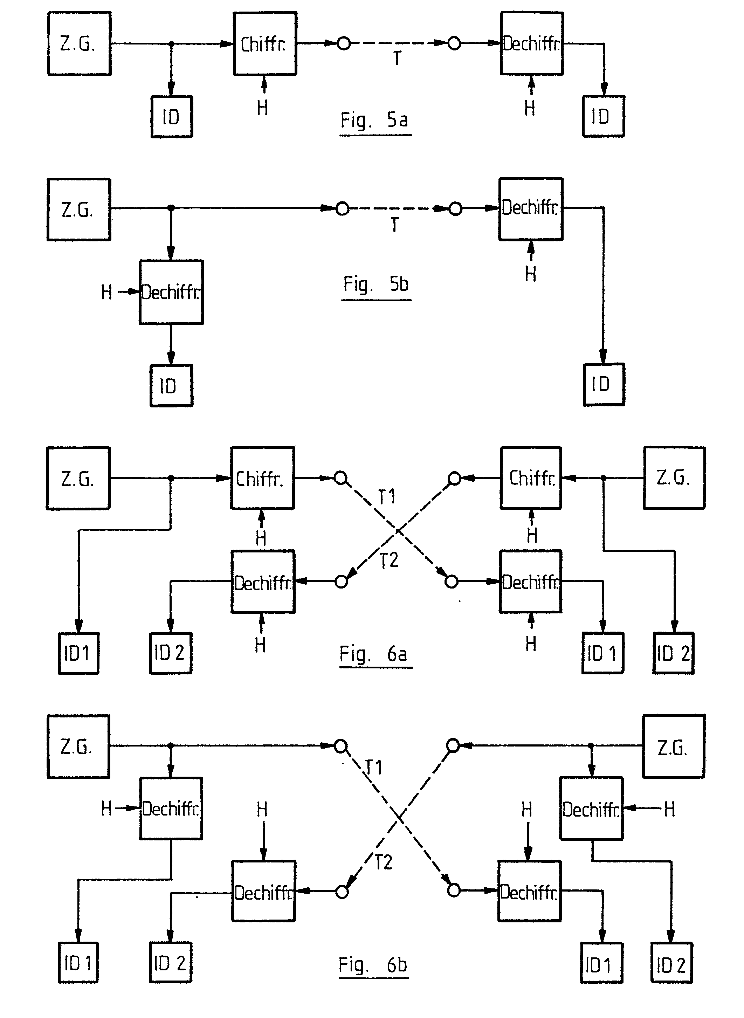

Die Fig. 5a und 5b zeigen beispielsweise, wie ein gemeinsamer Kennungsschlüssel ID erzeugt und gespeichert werden kann. In einer der Stationen (in der Zeichnung links) wird via Zufallsgenerator ZG ein zufälliger Kennungsschlüssel ID erzeugt und abgespeichert. Dieser Schlüssel wird dann chiffriert, in chiffrierter Form T zur Partnerstation übertragen und dort dechiffriert und gespeichert. Für diesen (ersten) Chiffrier- bzw. Dechiffriervorgang werden die Chiffriergeneratoren lediglich mit dem oder den anderen Schlüsseln determiniert, der Kennungsschlüssel selbst wird erst bei der Verarbeitung der eigentlichen Nachrichten mitverwendet. Vorzugsweise wird als Chiffrierschlüssel für die Chiffrierung des Kennungsschlüssels ein Einwegfunktions-Schlüssel verwendet, was in den Fig. 5a und 5b durch den Buchstaben H (analog Fig. 4) angedeutet ist.

Als Alternative zu Fig. 5a kann die vom Zufallsgenerator ZG erzeugte Information von vorneherein als chiffrierter Kennungsschlüssel aufgefaßt werden. In diesem in Fig. 5b gezeigten Fall wird die Information T dann klar übertragen, aber auch auf beiden Seiten dechiffriert und dann als Kennungsschlüssel ID gespeichert.

Die Fig. 6a und 6b zeigen zwei zu Fig. 5a und 5b analoge Varianten des Verfahrensablaufs, wenn für jede Verbindungsrichtung ein eigener Kennungsschlüssel ID1 bzw. ID2 verwendet wird. Hierbei bestimmt jede Station mittels Zufallsgenerator ZG ihren eigenen Kennungsschlüssel ID1, ID2 und überträgt ihn in chiffrierter Form T1, T2 fehlergesichert zur jeweils anderen Station, wo er dechiffriert und neben dem eigenen gespeichert wird. Selbstverständlich ist es dabei völlig egal, für welche Richtung dann schlußendlich welcher Kennungsschlüssel verwendet wird, solange dies durch ein entsprechendes Protokoll geregelt ist.

Im übrigen ist es natürlich auch möglich, die beiden gemäß Fig. 6a oder 6b erzeugten Kennungsschlüssel ID1 und ID2 in beiden Stationen irgendwie, z. B. durch Modulo-2-Addition, zu verknüpfen und daraus einen neuen, für beide Stationen gemeinsamen Kennungsschlüssel zu erzeugen.

Wenn mit einem Chiffriersystem auf Einwegfunktions-Basis, also unter (Mit-)Verwendung eines Einwegfunktions-Schlüssels, gearbeitet wird, sind für den in Fig. 6a bzw. 6b gezeigten Verfahrensablauf vier fehlergesicherte Übertragungen nötig: zunächst U und V zwecks Berechnung von H, danach T1 und T2 für die Festlegung von ID1 und ID2. Man kann die Anzahl der Übertragungen auf die Hälfte reduzieren, wenn man T1 = U und T2 = V setzt. Verfährt man gemäß Fig. 6b, so entsprechen dann den vom Zufallsgenerator erzeugten und übertragenen Größen T1 und T2 eben neu die Größen U und V gemäß Fig. 4.

U und V sind zwar nicht direkt vom Zufallsgenerator abgeleitete Größen, wohl aber die ihrer Berechnung zugrunde gelegten X und Y. Bei der verwendeten Art der Abbildung wird aber die Zufälligkeit nicht beeinflußt.

Dadurch, daß die Größen U und V sowohl für die Bestimmung von H als auch für die Bestimmung von ID verwendet werden, tritt keine Beeinträchtigung der kryptologischen Sicherheit auf. Da ID1 und ID2 durch Dechiffrieroperationen mittels des ersten H erzeugt werden, ist die Sicherheit dieses ersten H (zumindest in Abwesenheit weiterer Geheimelemente) relevant für die Sicherheit von ID.

Im Falle von Streamcipher-Chiffrierung darf für die Übertragung von ID1 und ID2 niemals dieselbe Generatorsequenz verwendet werden, sonst wäre der Kennungsschlüssel dem abhorchenden Gegner sofort zugänglich. Diese könnte etwa durch zeitlich gestaffelte Benützung derselben Generatorsequenz vermieden werden, oder aber durch den Austausch von Zusatzschlüsseln (Modifiers), welche eine an beiden Stationen verschiedene Generatorsequenz erzwingen.

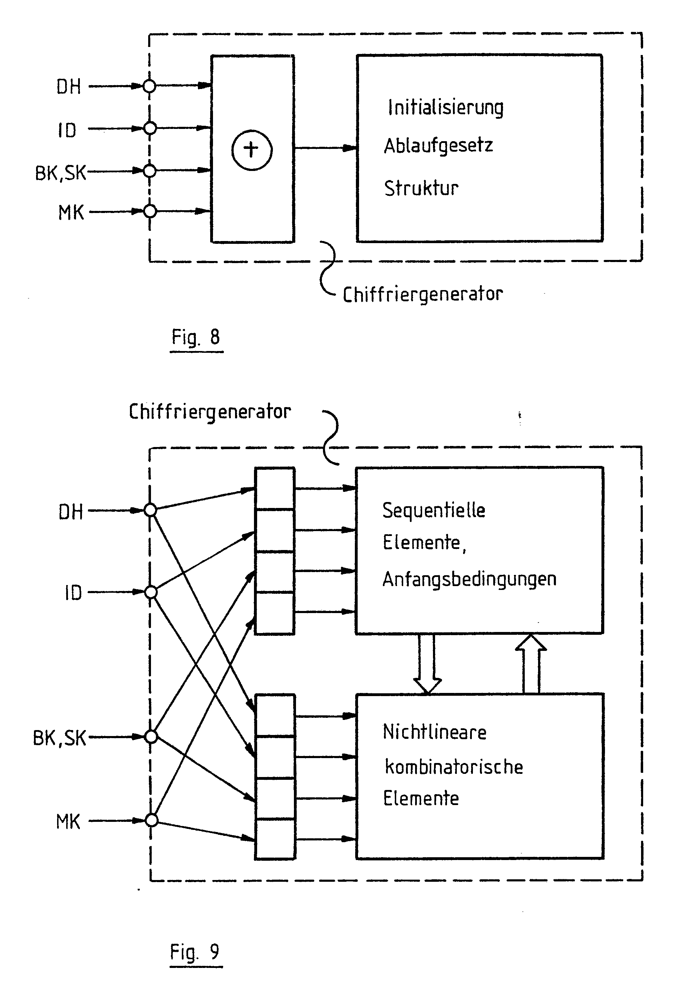

Um die Zahl der nötigen Übertragungen wirklich auf zwei zu beschränken, können die bei Streamcipher-Chiffrierung nötigen Zusatzschlüssel MK gemäß Fig. 7 definiert werden. Hier hat jede Dechiffrierbox DCH zwei Schlüsseleingänge für den Schlüssel H und den Zusatzschlüssel MK (Modifier), wobei T1 als Modifier bei der Dechiffrierung von T2 verwendet wird und umgekehrt. Praktisch werden die beiden Operationen natürlich zeitlich gestaffelt an einer einzigen Chiffriereinheit durchgeführt.

Wenn schließlich als Kennungsschlüssel ID direkt der allererste Einwegfunktions-Schlüssel DH oder eine daraus abgeleitete Größe verwendet wird, fällt der Rechen- und Übertragungsaufwand für die Festlegung der Kennungsschlüssel praktisch komplett weg.

Würde beim System nach Fig. 3 der Einwegfunktions-Schlüssel DH (oder eventuell auch der Grundschlüssel BK) direkt als Kennungsschlüssel verwendet werden, so ergäben sich aufgrund der Modulo-2-Verknüpfung während des Abstimmungsprozesses, wo diese Schlüssel noch identisch sind, eine Auslöschung. Daher wird der Einwegfunktions-Schlüssel DH durch eine durch den Block 13 angedeutete Operation, z. B. eine Spiegelung um die Wortmitte o. ä., modifiziert und dann in dieser modifizierten Form als Kennungsschlüssel ID gespeichert bzw. verwendet. Der Schalter 14 soll andeuten, daß eine Verbindung zum Speicher 4d nur während des Abstimmungsprozesses besteht und später (in der Regel) keine Veränderung des Speicherinhalts mehr erfolgt.

Bei den in Fig. 3 und 10 gezeigten Varianten der Chiffrier/Dechiffriervorrichtung wird der Chiffriergenerator durch drei Schlüsselgrößen determiniert, nämlich den Strukturschlüssel SK, den kombinierten Schlüssel CK aus ID, DH und/oder BK und den Zusatz- oder Modifizierschlüssel MK. Dieses System nützt zwar nicht alle Freiheitsgrade aus, ist aber äußerst zweckmäßig, um bestehende Chiffriereinheiten bis zu definierten Schnittstellen unverändert beizubehalten bei Erweiterungen zum 5-Schlüssel-System. Die Vorrichtung gemäß Fig. 3 oder Fig. 10 kann mit geeigneter Intelligenz ausgestattet sein, welches es z. B. ermöglicht, daß die Schlüssel selbst ausgewählt werden: Ist z. B. der Speicher 4a für den Grundschlüssel BK belegt, d. h., ein Schlüssel abgespeichert, so braucht kein DH-Schlüssel ausgetauscht zu werden. Sind bei einem geplanten Schlüsselwechsel die Speicher 4a und 4c für Grund- und Einwegfunktions-Schlüssel BK bzw. DH leer, so wird automatisch ein DH-Schlüssel ausgetauscht und abgespeichert. Der Kennungsschlüssel ID bleibt natürlich immer der gleiche. Selbstverständlich gibt es noch eine Reihe von weiteren Maßnahmen, Bedienungserleichterungen und Automatismen, die je nach Anwendungsfall eingebaut werden können.

Bei Einsatz einer erfindungsgemäßen Übermittlungsstation in einem Mehrpunktnetz kann die Handhabung des Kennungsschlüssels vielfältig organisiert sein. So ist es z. B. möglich, für alle Verbindungen innerhalb des Netzes denselben Kennungsschlüssel oder auch für jede einzelne Verbindung einen eigenen Kennungsschlüssel zu benutzen, wobei wiederum für die beiden Verbindungsrichtungen jeweils sowohl derselbe als auch unterschiedliche Kennungsschlüssel eingesetzt werden können.

Ein weiterer wesentlicher Punkt ist, daß die gegenseitige Abstimmung von zwei Stationen nicht akzidentiell oder ohne Zustimmung beider Partner erfolgen kann. Im wesentlichen genügt dazu, daß diejenigen Bedienungsorgane, mit welche ein Kennungsschlüsselaustausch ausgelöst wird, einerseits mechanisch und andererseits mittels eines geeigneten Quittierungssystems geschützt sind. Derartige Schutzsysteme sind an sich bekannt und benötigen daher hier keine nähere Erläuterung.

Das in den Fig. 2 und 3 dargestellte Konzept arbeitet im Maximum mit fünf Schlüsseln und besitzt eine beträchtliche Flexibilität. Die einzelnen Schlüssel haben dabei unterschiedliche Aufgaben.

Für eine Neu-Initialisierung kann DH oder MK verwendet werden, da eine Erneuerung in jedem Fall sicherstellt, daß früherer Schlüsseltext bei Streamciphergeneratoren nicht wiederholt wird. Bei Verwendung des Modifiers MK entfällt natürlich der bei DH benötigte Rechenaufwand; der Übertragungsoverhead ist im allgemeinen kleiner (besonders bei marginalen Kanälen) und das Verfahren ist auch beim Simplex-Betrieb anwendbar. Die Erneuerung von DH dagegen bringt den Vorteil, daß mit der Löschung des früheren DH automatisch die früheren Übertragungen gegen Schlüsselkaperung geschützt sind. Welchem Verfahren man den Vorzug gibt, ist sicher vom Anwendungsprofil abhängig.

Bei den Schlüsseln BK und SK braucht etwa SK nicht unbedingt permanent gespeichert zu sein. Vielmehr läßt sich aus dem früheren Schlüssel und einem Modifier MK bei Bedarf ein neuer Schlüssel errechnen, der dann nach Löschung des früheren dessen Stelle einnimmt.

Beim 5-Schlüssel-Prinzip muß der Art der Einwirkung der einzelnen Schlüssel auf die Freiheitsgrade des Chiffriersystems besondere Aufmerksamkeit geschenkt werden. Die Zahl dieser Freiheitsgrade, in Anzahl Bit gemessen — reicht von 56 beim normierten Digital Encryption Standard (DES) bis zu über 10 000 bei gewissen Streamciphergeneratoren. Es ist grundsätzlich vorzuziehen, wenn die zur Verfügung stehenden Freiheitsgrade durch die zur Verfügung stehenden Schlüssel möglichst optimal genutzt werden. Die beiden Extremfälle einfachster Verknüpfung und vollständiger »Nutzung« aller Schlüssel durch den Chiffriergenerator sind in den Fig. 8 und 9 dargestellt.

**Patentansprüche**

1. Verfahren zur chiffrierten Übermittlung von Nachrichten, wobei diese sendeseitig mit einer von einem durch wenigstens einen geheimen Chiffrierschlüssel determinierten Chiffriergenerator erzeugten Impulsfolge gemischt und empfangsseitig durch Mischen mit einer identischen, von einem identischen und durch denselben Chiffrierschlüssel determinierten Chiffriergenerator erzeugten Impulsfolge zurückgewonnen werden, dadurch gekennzeichnet, daß Sende- und Empfangsstation vor der Verbringung an ihre jeweiligen Einsatzorte aufeinander abgestimmt werden, indem sie vorzugsweise per Kabel zusammengekoppelt werden und dabei automatisch ein Kennungsschlüssel (ID) erzeugt und beidseitig nicht-flüchtig gespeichert wird, und daß zumindest während eines bestimmten Zeitraums alle Nachrichten unter Mitverwendung dieses Kennungsschlüssels als Chiffrierschlüssel chiffriert bzw. dechiffriert werden.

2. Verfahren nach Anspruch 1, dadurch gekennzeichnet, daß der Kennungsschlüssel in einer der Stationen zufallsmäßig erzeugt und in kryptologisch gesicherter Form zur anderen Station übertragen wird.

3. Verfahren nach Anspruch 1 oder 2, dadurch gekennzeichnet, daß als Chiffrierschlüssel neben dem Kennungsschlüssel ein Einwegfunktions-Schlüssel verwendet wird.

4. Verfahren nach Anspruch 3, dadurch gekennzeichnet, daß als Kennungsschlüssel ebenfalls ein Einwegfunktions-Schlüssel verwendet wird.

5. Verfahren nach Anspruch 1, dadurch gekennzeichnet, daß der Kennungsschlüssel eine Funktion von zwei in je einer Station erzeugten und zur jeweils anderen Station in kryptologisch gesicherter Form übertragenen Zufallsgrößen ist.

6. Verfahren nach einem der vorangehenden Ansprüche, dadurch gekennzeichnet, daß bei Mehrpunkt-Kommunikationsnetzen für jede einzelne Zweipunktverbindung zumindest in einer Übertragungsrichtung ein eigener Kennungsschlüssel verwendet wird.

7. Verfahren nach einem der vorangehenden Ansprüche, dadurch gekennzeichnet, daß für jede Übertragungsrichtung ein eigener Kennungsschlüssel verwendet wird.

8. Verfahren nach einem der vorangehenden Ansprüche, dadurch gekennzeichnet, daß Sicherungsmaßnahmen vorgesehen sind, welche die Erzeugung und Abspeicherung eines Kennungsschlüssels nur dann zulassen, wenn dies von beiden beteiligten Stationen erwünscht ist.

9. Verfahren nach einem der vorangehenden Ansprüche, dadurch gekennzeichnet, daß neben dem Kennungsschlüssel noch wenigstens zwei weitere Schlüssel als Chiffrierschlüssel verwendet werden.

10. Verfahren nach Anspruch 9, dadurch gekennzeichnet, daß die weiteren Schlüssel ein geheimer Grundschlüssel (BK) und/oder ein diesem analoger Einwegfunktions-Schlüssel (DH), ein Strukturschlüssel (SK) und ein in der Regel nicht geheimer Zusatzschlüssel (MK) sind.

11. Verfahren nach Anspruch 10, dadurch gekennzeichnet, daß der Einwegfunktions-Schlüssel (DH) und/oder der Grundschlüssel (BK) und der Kennungsschlüssel (ID) zu einem kombinierten Chiffrierschlüssel (CK) verknüpft werden.

12. Vorrichtung zur chiffrierten Übermittlung von Nachrichten mit wenigstens zwei je mit einer Chiffrier/Dechiffriereinrichtung (6) ausgestatteten Sende/Empfangsstation, die je einen nichtflüchtigen Speicher (4d) für einen Kennungsschlüssel (ID) aufweisen, der der Chiffrier/ Dechiffriereinrichtung (6) als Chiffrierschlüssel zuführbar ist, dadurch gekennzeichnet, daß wenigstens eine der Sende/Empfangsstationen mit einem Generator zur automatischen Erzeugung eines Kennungsschlüssels (ID) ausgestattet ist, und daß die beiden Sende/Empfangsstationen für die Übertragung und beidseitige Abspeicherung des Kennungsschlüssels vorzugsweise per Kabel koppelbar sind.

13. Vorrichtung nach Anspruch 12, dadurch gekennzeichnet, daß jede Sende/Empfangsstation Mittel (11, 5) aufweist zum zufallsmäßigen Erzeugen des Kennungsschlüssels (ID) oder zum Berechnen desselben aus einer erzeugten oder empfangenen zufallsmäßigen Information.

14. Vorrichtung nach Anspruch 12 oder 13, dadurch gekennzeichnet, daß jede Station mit gegen unbeabsichtigte Betätigung geschützten Aufruf- und Quittierungsorganen zum Erzeugen bzw. Abspeichern eines Kennungsschlüssels ausgerüstet ist.

## Claims

1. Process for the coded transmission of messages, whereby said messages are mixed on the sender side with a pulse sequence produced by a cipher generator determined by at least one secret cipher key and recovered on the receiver side by mixing with an identical pulse sequence produced by an identical cipher generator determined by the same cipher key, characterized in that the sender and receiver stations are tuned to each other prior to being placed in their respective locations, preferably by connecting them by a cable, thereby automatically producing an identifying key (ID) and permanently storing it on both sides, and that at least during a predetermined period of time all messages are coded and decoded by using said identifying key as the cipher key.

2. Process according to claim 1, characterized in that the identifying key is produced randomly in one of the stations and is transmitted to the other station in a cryptologically secure form.

3. Process according to claim 1 or 2, characterized in that, in addition to the identifying key, a single-way function key is used as the cipher key.

4. Process according to claim 1, characterized in that a single-way function is also used as the identifying key.

5. Process according to claim 1, characterized in that the identifying key is a function of two random values each produced in one of the stations and transmitted to the other station in a cryptologically secure form.

6. Process according to one of the preceding claims, characterized in that the case of multipoint communication networks, for each individual two-point connection a specific identifying key is used in at least one direction of transmission.

7. Process according to one of the preceding claims, characterized in that for each transmission direction a specific identifying key is used.

8. Process according to one of the preceding claims, characterized in that security measures are provided whereby the generation and storage of an identifying key is permitted only if so desired by both of the stations involved.

9. Process according to one of the preceding claims, characterized in that, in addition to the identifying key, at least two further keys are used as cipher keys.

10. Process according to claim 9, characterized in that the further keys are a secret base key (BK) and/or a single way function key (DH) analogous to said base key, a structure key (SK) and a supplemental key (MK), which generally is not secret.

11. Process according to claim 1, characterized in that the single way function key (DH) and/or the base key (BK) and the identifying key (ID) are combined into a combination coding key (CK).

12. Apparatus for the coded transmission of messages with at least two sender/receiver stations equipped with a coding/decoding device (6), with each of said stations comprising a nonvolatile memory (4d) for the identifying key (ID), which may be communicated to the coding/decoding device (6) as the coding key, characterized in that at least one of the sender/receiver stations is equipped with a generator for the automatic production of an identifying key (ID), and that the two sender/receiver stations may be connected, preferably by cable, for the transmission and bilateral storage of the identifying key.

13. Apparatus according to claim 12, characterized in that each sender/receiver station comprises means (11, 5) for the random production of the identifying key (ID) or for the calculation of said identifying key from random information produced or received.

14. Apparatus according to claim 12 or 13, characterized in that each station is equipped with calling and acknowledging elements protected against unintentional actuation, for the production and storage of an identifying key.

**Revendications**

1. Procédé pour une transmission chiffrée d'informations, celles-ci étant mélangées du côté émission avec une séquence d'impulsions produite par un générateur de chiffrage déterminé par au moins un code secret de chiffrage, et étant régénérées du côté réception par mélange avec une séquence d'impulsions identiques, produite par un générateur de chiffrage identique et déterminée par le même code de chiffrage, caractérisé en ce qu'une station émettrice et une station réceptrice sont accordées mutuellement avant l'installation dans leur lieu d'utilisation correspondant, en étant couplées ensemble avantageusement par câble et en produisant alors automatiquement un code d'identification ID qui est mémorisé des deux côtés de façon rémanente, et en ce qu'au moins pendant un intervalle de temps déterminé, toutes les informations sont chiffrées ou déchiffrées en utilisant ce code d'identification comme code de chiffrage.

2. Procédé selon la revendication 1, caractérisé en ce que le code d'identification est produit de façon aléatoire dans une des stations et est transmis sous une forme cryptologiquement sûre à une autre station.

3. Procédé selon la revendication 1 ou 2, caractérisé en ce que, comme code de chiffrage, on utilise en dehors du code d'identification un code de fonction unidirectionnelle.

4. Procédé selon la revendication 3, caractérisé en ce que, comme code d'identification, on utilise également un code de fonction unidirectionnelle.

5. Procédé selon la revendication 1, caractérisé en ce que le code d'identification est une fonction de deux grandeurs aléatoires produites dans une station respective et transmise sous une forme cryptologiquement sûre à une autre station respective.

6. Procédé selon l'une des revendications précédentes, caractérisé en ce que, dans le cas de réseaux de communication à plusieurs points, on utilise pur chaque liaison entre deux points, au moins dans une direction de transmission, un code d'identification particulier.

7. Procédé selon l'une des revendications précédentes, caractérisé en ce qu'on utilise un code d'identification particulier pour chaque direction de transmission.

8. Procédé selon l'une des revendications précédentes, caractérisé en ce qu'il est prévu des moyens de sécurité qui autorisent la production et la mémorisation d'un code d'identification seulement lorsque cela est souhaité par les deux stations participantes.

9. Procédé selon l'une des revendications précédentes, caractérisé en ce qu'on utilise en dehors du code d'identification encore au moins deux autres codes comme codes de chiffrage.

10. Procédé selon la revendication 9, caractérisé en ce que les autres codes sont un code de base secret (BK) et/ou un code de fonction unidirectionnelle (DH) analogue à celui-ci, un code structural (SK) et un code additionnel (MK) généralement non secret.

11. Procédé selon la revendication 10, caractérisé en ce que le code de fonction unidirectionnelle (DH) et/ou le code de base (BK) et le code d'identification (ID) sont combinés sous la forme d'un code composite de chiffrage (CK).

12. Dispositif pour une transmission chiffrée d'informations avec au moins deux stations émettrices/réceptrices équipées chacune d'un dispositif de chiffrage/déchiffrage (6), qui comportent chacune une mémoire rémanente (4d) pour un code d'identification (ID), qui peut être appliqué comme code de chiffrage au dispositif de chiffrage/déchiffrage (6), caractérisé en ce qu'au moins une des stations émettrices/réceptrices est équipée d'un générateur pour la production automatique d'un code d'identification (ID) et en ce que les deux stations émettrices/réceptrices peuvent être couplées avantageusement par câbles pour la transmission et la mémorisation des deux côtés du code d'identification.

13. Dispositif selon la revendication 12, caractérisé en ce que chaque station émettrice/réceptrice comporte des moyens (11, 5) pour produire de façon aléatoire le code d'identification (ID) ou bien pour effectuer son calcul à partir d'une information aléatoire produite ou reçue.

14. Dispositif selon la revendication 12 ou 13, caractérisé en ce que chaque station est équipée d'organes d'appel et de validation, protégés contre un actionnement non intentionnel, pour produire ou mémoriser un code d'identification.

Fig. 1

Fig. 7

$$ID = f(H, T_1, T_2) \oplus f(H, T_2, T_1)$$

Fig. 2

Fig. 3

Fig. 4

STAND DER TECHNIK

Fig. 5a

Fig. 5b

Fig. 6a

Fig. 6b

DH

ID

BK,SK

MK

$\oplus$

Initialisierung

Ablaufgesetz

Struktur

Chiffriergenerator

Fig. 8

Chiffriergenerator

DH

ID

BK,SK

MK

Sequentielle

Elemente,

Anfangsbedingungen

Nichtlineare

kombinatorische

Elemente

Fig. 9

17

Fig.10